Europäisches Patentamt

European Patent Office

Office européen des brevets

(11) Publication number: **0 147 445**
**B1**

## EUROPEAN PATENT SPECIFICATION

(45) Date of publication of patent specification: **19.11.87**

(21) Application number: **84902424.5**

(22) Date of filing: **11.06.84**

(86) International application number:
**PCT/US84/00895**

(87) International publication number:
**WO 85/00119 17.01.85 Gazette 85/02**

(51) Int. Cl.⁴: **B 01 J 8/38,** B 01 J 8/32 //
F23C11/02

(54) **HIGH-VELOCITY MULTISOLID FLUIDIZED BED PROCESS.**

(30) Priority: **20.06.83 US 505677**

(43) Date of publication of application:
**10.07.85 Bulletin 85/28**

(45) Publication of the grant of the patent:
**19.11.87 Bulletin 87/47**

(84) Designated Contracting States:
**AT BE CH DE FR GB LI LU NL SE**

(56) References cited:
**US-A-3 597 327**
**US-A-3 855 070**
**US-A-3 912 465**
**US-A-4 165 717**

**Oil & Gas Journal, vol. 81, 21 February 1983,
no. 8 (Tulsa, Oklahoma, US); O. Jones et al.:
"Solid fuels proven for oil-field steam
generation", pages 109-112**

(73) Proprietor: **BATTELLE DEVELOPMENT
CORPORATION
505 King Avenue
Columbus Ohio 43201 (US)**

(72) Inventor: **NACK, Herman
1678 Van Pelt Street
Columbus, OH 43220 (US)**

(74) Representative: **Dousse, Blasco et al
7, route de Drize
CH-1227 Carouge/Genève (CH)**

Courier Press, Leamington Spa, England.

**Description**

Background of the invention

Entrained bed reactor having varying cross-sections have been proposed. For example, Squires U.S. Patent 3,597,327 suggests tapered reactors to control the relative velocity of fluidizing gas therein.

Multisolid fluidized beds (hereafter MSFB), such as shown in our prior U.S. Patent 4,084,545, are also known. MSFB's are very effective in increasing the efficiency of reactions carried out in the reactor. The multisolid concept provides that large particles are fluidized in a lower region of the reactor while fine particles are entrained throughout the reactor at the same time. The fine particles are recycled out the top of the reactor and back into the coarse-particle, fluidized bed. In the coarse-particle bed (or dense bed), the fine particles and any solid reactants collide with the larger particles and with each other, thereby increasing their residence time and contact in the reactor improving both the time and opportunity for complete reaction of all reactants.

Another way to improve efficiency of reaction in an MSFB is to recycle larger quantities of fine particles. The larger recycle of the fine particle inventory seems to increase residence time because of a self-inhibitory effect on each pass through the reactor and also because of the increased number of once through passes over time. The result is an increase in the ratio of the residence time in the reactor versus the storage time in the cyclones and hoppers outside the reactor waiting to be reintroduced. Heat transfer to an external heat exchanger may also be improved.

Unfortunately, the increased recycle causes a problem for the MSFB which was unrecognized until recently. The upward movement of fine particles tends to lift the coarse particles out of their dense, fluidized bed and, at some level of recycle, into a state of entrainment. This would, of course, eliminate the MSFB advantages. For example, it has been observed that a particular coarse-particle bed may be fluidized alone at about 3 m/sec (superficial velocity of the gas), but not be entrained until the gas velocity exceeds 30 m/sec. A high safety margin for gas surges or other transient conditions exists before the particles would be lost from the bed. However, with a recycle of fine particles in the range of, for example, about 30—75,000 kg/hr-m$^2$, the fluidization velocity remains about 3 m/sec, but the coarse particles are entrained (in the gas and recycled particles) at a gas velocity of as low as 10 m/sec. Clearly the margin for error is reduced considerably. With high recycle, gas surges alone can blow the coarse particles out of the reactor.

Summary of the invention

The above-described entrainment of the coarse particles could be lessened by increasing the weight (size or density) of the particles. But at lower gas velocities or lower recycle rates of low load situations these heavy particles then tend to settle out and remain unfluidized, again deterring the efficient operation of the MSFB.

It is an objective of the present invention to overcome the undesirable entrained or unfluidized conditions of the MSFB's dense bed due to changes in gas velocity or fine-particle recycle rates.

The inventive process utilizes larger coarse particles to prevent entrainment at high gas velocity and then prevents settling thereof at low gas velocity by establishing a high-velocity region in the bottom of the reactor and a lower velocity region above. The fluidizing gas fluidizes or entrains the coarse particles in the high-velocity region and, if entrained, raises the coarse particles to the lower velocity region in the reactor where they remain or lose buoyancy and drop back to the higher velocity zone. The high velocity region may preferably take the form of a reduced-cross-section zone in the lower portion of the reactor. It is below and contiguous to a larger-cross-section upper region. Fine particles are meanwhile recycled out the top of the reactor and back into the reactor within the high velocity region.

The process is begun by filling the reduced-cross-section zone of the reactor to an appropriate level with large, dense-bed particles. Fluidizing gas is introduced through a distributor plate below the dense-bed particles and the bed is fluidized. When the dense bed has expanded sufficiently, fine particles may then be introduced into the dense bed to help lift the coarse particles and to ultimately recirculate through the reactor. The settled dense bed should be totally within the reduced-cross-section zone but of sufficient depth such that, when the bed is lifted by the fluidizing gas and recycled fine particles, its upper boundary is above the reduced-cross-section zone.

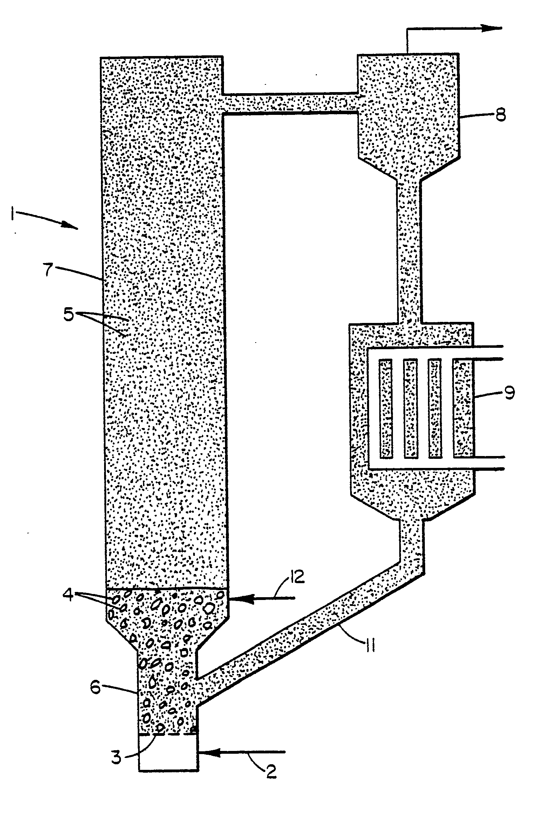

Brief description of the drawing

The Figure is a schematic view of the reactor used in the novel process.

Detailed description

The Figure shows a representation of a reactor for practicing the method. The reactor 1 comprises an upper region or zone 7, and a contiguous, lower, reduced-cross-section region or zone 6. A cyclone 8, external heat exchanger or reactor 9, and recycle leg 11 provide an external path for recycle of fine particles 5 from the top of the reactor back into the bottom. A distributor plate 3 distributes the fluidizing gas 2 to fluidized or entrain the coarse particles 4 and the fine particles. Secondary gas may be added at 12.

A conventional MSFB is similar to the above reactor except that the reactor has a generally uniform cross section. Operation of the conventional reactor comprises fluidizing the coarse particles 4 into a dense bed in a limited space above the distributor plate 3 using fluidizing gas entering at 2. Fine particles are introduced into the reactor and are simultaneously entrained by the fluidizing gas. The fine particles are continuously cycled through the dense bed and the freeboard region, out the top of the reactor and back through the cyclones and heat exchangers into the lower part of the reactor.

Particle sizes of the coarse and fine fractions and the velocity of the fluidizing gas must be finely tuned to obtain the desired fluidization and entrainment, residence times for reactants, and efficiencies of reaction, among other goals. The ability to increase the reaction rate or efficiency through increases or decreases in the velocity of fluidizing gas or the recycle ratio of fine particles is severely limited by the dependency of the coarse-particle fluidization behavior on these parameters. In particular, a surge in the gas velocity or recycle rate can entrain the coarse particles out of the reactor. Conversely, a turndown of the gas velocity or recycle rate to slow a reaction can lead to settling of the coarse particles which generally leads to poor mixing, restriction of recycled particle entry into the dense bed and nonuniform conditions in the reactor, such as hot spots during combustion reactions.

The present inventive process involves similar apparatus as prior MSFB processes except that a reactor having an important reduced-cross-section lower zone is utilized with relatively larger coarse particles for the dense bed. For a given dense bed material and gas flow rate, the size of the reduced-cross-section lower region is designed such that the minimum fluidization velocity of the coarse particles without fines recycle will be exceeded. Preferably, the gas velocity in the lower region will exceed the minimum fluidization velocity by at least about 10%.

Secondary gas is introduced as necessary to continue fluidization and complete any reactions. It is preferred to add only that gas necessary to fluidize the coarse particles in the lower region and any further requirements at 12 because of the lower pressure drop and power requirements. The size of the larger upper zone is designed such that the minimum fluidization velocity of the coarse particles with fines recycle is only barely exceeded. The height of the lower region and the depth of coarse particles are selected such that the upper boundary of the settled dense bed is within the lower region and the upper boundary of the fluidized dense bed is within the upper region. The recycle leg 11 must enter the reactor within the lower region.

The new process of starting and maintaining the operation of the MSFB comprises providing the coarse particles to the selected depth and introducing fluidizing gas at a velocity sufficient to exceed the minimum fluidization velocity of the coase particles in the lower region. Recycled fine particles are then able to be injected into the lower section to further raise the boundary of the dense bed into the upper region. The combination of high velocity gas in the reduced-cross-section zone and fine-particle recycle combine to keep the larger coarse particles from settling out. In fact, they generally combine during normal operation to entrain some of the coarse particles in the lower region up to the upper, enlarged-cross-section region where the superficial velocity is lower. The coarse particles can then fall back to the lower region again or be fluidized in a lower part of the upper region if the gas velocity and recycle rate are sufficiently high. If the particle sizes and other operating conditions are selected in this manner for normal operation, the system may be "turned down" substantially (lower gas velocity and/or recycle rate) for a low load situation without the coarse particles settling out. This broader operating range or higher turndown capability is one of the important advantages over prior fluidized bed and MSFB processes. In fact, with the relatively larger dense bed particles, it has been found that the present MSFB may be typically run at twice the operating velocity as previous systems without incurring settling problems at the low operating velocities and without a loss in reaction efficiency. At high velocities, this would allow the use of the MSFB for additional kinds of reactions, such as fast chemical reactions, for example. The operating range of gas velocity may be at least twice as large as the prior MSFB reactors.

The upper and lower sections may each be of substantially uniform cross section or may be tapered. In the Figure, the uniform, cylindrical upper section is shown with a frustoconical section at its lower end joining the reduced-cross-section lower zone. A tapered connecting section is not necessary but is preferred to prevent dead regions near the outside corners where particles could rest out of the flow path of the fluidizing gas. A reactor without discrete regions, that is, with a uniform taper over its entire length could also be used though we believe at lower efficiency and higher production cost.

The coarse, dense bed particles are physically and chemically inert as in conventional MSFB processes, but may be considerably larger if desired. Conventional beds have coarse particles in the neighborhood of 2,38—1,19 mm (−8+16 mesh U.S. Standard) whereas "particles" up to at least about 2.5 centimeters and larger can be utilized in the present process. The depth of the settled dense bed may also be less than in prior MSFB reactors, leading to lower pressure drops and lower operating costs. Depths on the order of 15 cm have been used successfully.

Fine particles in the entrained bed are preferably inert and stable at operating temperature and are of conventional size in the range of 1,19—0,105 mm (−16+140 mesh) and finer. Other conventional materials, such as limestone or lime in combustion process to capture sulfur, may also be added. Where oxidizing conditions prevail, the coarse and fine components preferably comprise metals or metal oxides such as iron oxide. One specific material which may be used as either component is a hematite ore, containing about 93% iron oxide, $Fe_2O_3$, and supplied under the trademark "Speculite" by C. E. Minerals, Inc., King of Prussia, Pennsylvania. The components may alternatively comprise nickel, nickel oxide, or alumina, for example. The coarse and fine components may, in some instances to be discussed below, comprise a reactant such as coke or shale. The fine component may also additionally comprise silica or a reactant such as limestone or dolomite under conditions wherein sulfur capture is desired.

It has been found that it is theoretically possible, though possibly difficult in practice, to use as reactant at least a portion of the coarse or fine particle component. For example, the use of shale or oily rock which comprise hydrocarbons in a substantially inert solid residue may be used as the coarse component, and upon attrition, as the fine fraction. Coal and coke have less residue but may still be used in the same manner. The reactants having a substantially inert residue are easier to incorporate into the method, but all of these reactants are difficult and require close control and planning in order to maintain the necessary coarse particle dispersion and recirculating entrained bed. In particular, the addition of fresh reactants and the removal of residue in the correct amounts to maintain the method would be critical.

The superficial gas velocity in the reactor may be very high compared with one bed systems and with prior MSFB systems. Velocities in the range of about 30—60 ft/sec (9.2—18.4 m/sec) are useful for efficient operation. An oxygen containing gas for oxidation reactions, a hydrogen containing gas for reducing or hydrogenation reactions, an inert gas for pyrolysis reactions and steam for gasification reactions are preferred fluidizing media. The fluid media may also comprise a liquid or slurry, such as a coal slurry in the case of a liquefaction reaction.

The process may be used with the great variety of reactions now carried out in fluid beds. The preferred reaction is combustion and the preferred reactant is a particulate coal which can be fed to the dense bed in large sizes. This allows a cost savings in that the coal does not have to be finely ground. It has been found that reactant particles larger than the coarse particles may be buoyed by the interacting particles of the two beds. For example, large chunks of coal and shale at least about 5 cm in diameter may be burned in the process.

Examples of the preferred embodiments

Example 1

Combustion in a 15.25 cm reactor

Combustion tests were carried out in a reactor having a 6 inch (15.25 cm) diameter upper region terminating in a 4.5 inch (17.5 cm) long frustoconical section joined to a 3 inch (7.5 cm) diameter −9 inch (35 cm) long lower zone. The recycle leg entered in about the center of the reduced-cross-section, lower zone.

Combustion tests were run using Illinois No. 6 coal ground to 2,38—2,0 mm (−8+10 mesh size). Two types of coarse particles were used for the dense bed: 1.27 cm alumina grinding balls (sp. gr. 3.4, weight 4.55 g) and 1.27 cm long stainless steel rings (sp. gr. 8.0, weight 10.9 g) made from heavy-wall tubing (1.4 cm O.D.×0.79 cm I.D.). The fine-particle, entrained bed was made up of 0,840—0,149 mm (−20+100 mesh) silica sand. The coal and fine limestone for sulfur capture were fed into the dense bed with the fine particle recycle. Recycle rate of about 720 kg/hr (39,700 kg/hr-m$^2$) were used.

Detailed conditions and results are shown in Table 1. The coarse particles were fluidized/entrained in the lower zone at 12.2 m/sec superficial velocity. Combustion efficiencies of about 99 percent were achieved at high gas velocities and firing rates. With the S.S. rings, the firing rate approached 837 · 10$^6$ J/h (0.2 million kcal/hr) at 14.4 m/sec, both about twice the design capacity for conventional MSFB operation in the 15.25 cm reactor. Sulfur capture was consistent with conventional MSFB.

**0 147 445**

TABLE 1
Summary of 15.25 cm reactor tests

| Test No. | 1 | 2 |
|---|---|---|
| Test period, hr | 2.5 | 3.0 |
| Coal | Illinois No. 6 | Illinois No. 6 |
|    Feed rate, kg/hr | 18.6 | 31.6 |
| Limestone | Piqua/Miami filler | Piqua/Miami filler |
|    Feed rate, kg/hr | 5.45 | 9.6 |
| Dense bed | 1.27 cm alumina satellites | 1.27 cm S.S. rings |
|    Settled height (cm) | 8 | 12 |
| Combustion temperatures, °C | | |
|    Dense bed | 832 | 818 |
|    Freeboard | 870 | 921 |
| Excess air, percent | 43 | 39 |
| Combustor velocities, m/sec | | |
|    Lower zone (dense bed) | 12.5 | 12.5 |
|    Upper zone (dense bed) | 8.4 | 14.4 |
|    Freeboard (above dense bed) | 6.0 | 10.3 |
| Combustor pressure drops, cm $H_2O$ | | |
|    Lower zone (dense bed) | 65.9 | 113.0 |
|    Upper zone (dense bed) | 20.3 | 12.7 |
|    Freeboard (above dense bed) | 5 | 5 |
| Flue gas composition[a] | | |
|    $SO_2$, ppm | 860 | 1070 |
|    $NO_x$, ppm | 260 | 330 |
|    CO, ppm | 130 | 100 |
|    $CO_2$, percent | 12.6 | 12.8 |
|    $O_2$, percent | 6.5 | 6.0 |
| Ca/S ratio, moles/mole | 2.0 | 2.1 |
| Sulfur capture, percent | 76 | 70 |
| Carbon utilization, percent | 98.9 | 99.4 |

[a] $SO_2$, $NO_x$ and CO corrected to 18 percent excess air.

Example 2
Combustion in a 25.4 cm reactor

One combustion test was run with fluid coke and two more with Illinois No. 6 coal in a 25.4 cm diameter reactor. The upper portion of the reactor reduced down over a 20 cm length to join at its lower end with a 10.1 cm diameter reduced-cross-section zone. This lower zone was 53 cm in length. A fine-particle recycle pipe entered the lower zone about one-third of the way up from the bottom.

The coal was the same as in Example 1, as was the fine entrained bed (sand). Recycle rates were about 2000 kg/hr (39,600 kg/hr-m²). The fluid coke was about 87% carbon and was predominantly 0,42—0,21 mm (−40+70 mesh) in size, although some finer fractions were present in small quantities. Limestone having a fairly even particle distribution of 0,297—0,044 mm (−50+325 mesh) but predominantly 0,149—0,044 mm (−100+325 mesh) was introduced with the fuel and fine recycle. The coarse particles of the dense bed were either 1.27 cm sintered bauxite balls or 1.27 cm sintered iron ore balls. Other conditions and the process results are shown in Table 2.

# 0 147 445

## TABLE 2
### Summary of 25.4 cm reactor tests

| Test | 1 | 2 | 3 |
|---|---|---|---|
| Test period | 2.25 | 2.5 | 3.0 |
| Fuel | Fluid coke | Illinois No. 6 | Illinois No. 6 |
| Feed rate, kg/hr | 30.0 | 30.7 | 55.3 |
| Limestone | | | |
| Feed rate, kg/hr | 23.4 | 6.75 | 10.5 |
| Dense bed | 1.27 cm Masterbeads | 1.27 cm Iron ore | 1.27 cm Iron ore |
| Combustion temperature, °C | | | |
| Dense bed | 885 | 848 | 879 |
| Freeboard | 911 | 864 | 909 |
| Excess air, percent | 27 | 34 | 34 |
| Combustor velocities, m/sec | | | |
| Lower zone (dense bed) | 14.0 | 12.5 | 14.3 |
| Upper zone (dense bed) | 6.75 | 5.4 | 9.4 |
| Freeboard (above dense bed) | 7.75 | 6.2 | 11.7 |
| Combustor pressure drops, cm $H_2O$ | | | |
| Lower zone (dense bed) | 93.5 | 118.0 | 70.9 |
| Upper zone (dense bed) | 20.3 | 15.2 | 10.3 |
| Freeboard (above dense bed) | 8.8 | 3.8 | 11.4 |
| Flue gas composition[a] | | | |
| $SO_2$, ppm | 530 | 990 | 1490 |
| $NO_x$, ppm | 100 | 190 | 220 |
| CO, ppm | 85 | 205 | 125 |
| $CO_2$, percent | 15.2 | 13.2 | 13.2 |
| $O_2$, percent | 4.5 | 5.4 | 5.5 |
| Ca/S ratio, moles/mole | 3.5 | 1.5 | 1.3 |
| Sulfur capture, percent | 87.6 | 59.7 | 58.5 |
| Carbon utilization, percent | 96.6 | 99.0 | 98.4 |

[a] $SO_2$, $NO_x$ and CO corrected to 18 percent excess air.

Carbon utilization and sulfur capture are consistent with conventional MSFB processes. However, the operation was considerably less stable than in Example 1 due to slugging in the lower, reduced cross section region caused by wall friction. It is believed that this may result from the long length of the reduced cross section region (53 cm). Therefore, this section should be kept as short as possible to minimize dense bed slugging and pressure drop.

However, there is no doubt that the reduced cross section region enables the use of much larger dense bed particles. This enables an increased turndown range for the process and for higher absolute gas velocities for performing new reactions in an MSFB or completing older ones more efficiently.

**Claims**

1. A method of increasing the operating range for gas flow rates in multisolid fluidized bed (MSFB) processes utilizing an overlapping coarse-particle fluidized bed with a recirculating fine-particle entrained bed in an MSFB reactor, the improvement comprising

providing a high-velocity region in a lower portion of the coarse-particle fluidized bed and a lower velocity region in an upper remaining portion of the coarse-particle bed, and

recirculating the fine particles from the upper portion of the reactor into the high-velocity region of the coarse-particle bed.

6

2. The method of claim 1 wherein the fine and coarse particles are substantially physically and chemically inert.

3. The method of claim 1 which further comprises introducing secondary gas into the lower velocity region.

4. A method of operating a multi-solid fluidized bed reactor having a fluidized, coarse-particle bed and an overlapping, entrained, fine-particle bed and wherein the fine particles are recycled from the top of the reactor into the fluidized, coarse-particle bed at the bottom of the reactor wherein the improvement comprises

providing a reactor having contiguous upper and lower zones, such lower zone being of reduced cross section relative to the upper zone,

fluidizing the coarse-particle bed in a fluidizing gas within the lower zone, introducing the fine particles into the coarse particle bed in the lower zone, and entraining the fine-particles in the fluidizing gas within both the lower zone and the upper zone at a rate sufficient to maintain the level of the upper boundary of the coarse particle bed in the upper zone.

5. The method of claim 4 further comprising introducing fluidizing gas at a rate sufficient, without recycle of fine particles, to raise the upper boundary of the coarse particle bed into the upper zone.

6. The method of claim 4 wherein either the upper zone or the lower zone of the reactor has a substantially uniform cross-section over its length, and the other zone has a non-uniform cross section over its length.

7. The method of claim 6 wherein the lower zone has a substantially uniform cross section over its length and the upper zone has a uniform cross section over substantially its entire length and a tapered connecting section over the remaining length for joining the lower zone.

8. The method of claim 4 wherein either the upper zone or lower zone has a tapered cross section.

9. The method of claim 4 wherein both upper and lower zones have tapered cross sections.

10. The method of claim 9 wherein the upper and lower zones have a continuous, decreasing taper from top to bottom of the reactor.

11. The method of claim 4 wherein the coarse particles and the fine particles are inert.

12. The method of claim 4 which further comprises introducing secondary gas into the upper zone.

13. The method of claim 12 further comprising introducing fluidizing gas at a rate insufficient, without recycle of fine particles, to raise the coarse particle bed into the upper zone further.

**Patentansprüche**

1. Verfahren zur Vergrößerung des Arbeitsbereiches für Gasströmungsgeschwindigkeiten bei Wirbelschichtverfahren mit mehreren Feststoffen (MSFB), wobei ein überlappendes Fließbett mit Grobteilchen mit einem Fließbett rückgeführter Feinteilchen in einem MFSB-Reaktor verwendet wird, dadurch gekennzeichnet, daß ein Hochgeschwindigkeitsbereich in einem unteren Abschnitt des Grobteilchenfließbettes und ein Bereich mit geringerer Geschwindigkeit in einem oberen, verbleibenden Bereich des Grobteilchenbettes vorgesehen werden, und die feinen Teilchen vom oberen Bereich des Reaktors in den Hochgeschwindigkeitsbereich des Grobteilchenbettes rückgeführt werden.

2. Verfahren nach Anspruch 1, dadurch gekennzeichnet, daß die feinen und groben Teilchen im wesentlichen physikalisch und chemisch inert sind.

3. Verfahren nach Anspruch 1, dadurch gekennzeichnet, daß ein Sekundärgas in den Bereich mit geringer Geschwindigkeit eingebracht wird.

4. Verfahren zum Betreiben eines Wirbelschichtreaktors mit mehreren Feststoffen, der ein fluidisiertes Grobteilchenbett und ein überlappendes Feinteilchenmitnahmebett besitzt und bei dem die feinen Teilchen vom oberen Ende des Reaktors in das fluidisierte Grobteilchenbett am Boden des Reaktors rückgeführt werden, dadurch gekennzeichnet, daß ein Reaktor mit benachbarten oberen und unteren Zonen vorgesehen wird, wobei die untere Zone relativ zur oberen Zone einen verringerten Querschnitt hat, daß das Grobteilchenbett mit einem Fluidisiergas in der unteren Zone fluidisiert wird, daß die feinen Teilchen in das Grobteilchenbett in der unteren Zone eingebracht werden und daß die feinen Teilchen im Fluidisiergas sowohl in der unteren Zone als auch in der oberen Zone in einem Ausmaß mitgenommen werden, das ausreicht, um die Höhe der oberen Grenze des Grobteilchenbettes in der oberen Zone aufrechtzuerhalten.

5. Verfahren nach Anspruch 4, dadurch gekennzeichnet, daß das Fluidisiergas in einem Ausmaß eingebracht wird, das ausreicht, ohne die feinen Teilchen rückzuführen, die obere Grenze des Grobteilchenbettes in die obere Zone zu heben.

6. Verfahren nach Anspruch 4, dadurch gekennzeichnet, daß entweder die obere Zone oder die untere Zone des Reaktors einen im wesentlichen über ihre Länge gleichförmigen Querschnitt hat und die andere Zone einen nichtgleichmäßigen Querschnitt über ihre Länge hat.

7. Verfahren nach Anspruch 6, dadurch gekennzeichnet, daß die untere Zone über ihre Länge einen im wesentlichen gleichmäßigen Querschnitt und die obere Zone einen über ihre gesamte Länge im wesentlichen gleichmäßigen Querschnitt und zum Anschluß der unteren Zone einen abgeschrägten Verbindungsabschnitt über die verbleibende Länge hat.

8. Verfahren nach Anspruch 4, dadurch gekennzeichnet, daß entweder die obere oder die untere Zone einen abschrägten Querschnitt hat.

9. Verfahren nach Anspruch 4, dadurch gekennzeichnet, daß sowohl die obere als auch die untere Zone abgeschrägte Querschnitte haben.

10. Verfahren nach Anspruch 9, dadurch gekennzeichnet, daß die obere und die untere Zone eine kontinuierliche, abnehmende Abschrägung vom oberen Ende zum unteren Ende des Reaktors haben.

11. Verfahren nach Anspruch 4, dadurch gekennzeichnet, daß die groben und die feinen Teilchen inert sind.

12. Verfahren nach Anspruch 4, dadurch gekennzeichnet, daß ein Sekundärgas in die obere Zone eingebracht wird.

13. Verfahren nach Anspruch 12, dadurch gekennzeichnet, daß das Fluidisiergas in einem Ausmaß eingebracht wird, das nicht ausreicht, ohne die feinen Teilchen rückzuführen, das Grobteilchenbett weiter in die obere Zone zu heben.

**Revendications**

1. Procédé pour élargir la gamme opérationnelle des débits de gaz dans les procédés à lit fluidisé multisolide (MSFB) utilisant un lit fluidisé de particules grossières de recouvrement conjointement avec un lit entraîné de particules fines en circulation dans un réacteur MSFB, cette amélioration consistant à:
fournir une zone de haute-vitesse dans une partie inférieure d'un lit fluidisé de particules grossières et une zone de faible vitesse dans une partie restante supérieure du lit de particules grossières, et
faire recirculer les particules fines de la partie supérieure du réacteur à la zone haute-vitesse du lit de particules grossières.

2. Le procédé de la revendication 1, dans lequel les particules fines et grossières sont substantiellement inertes physiquement et chimiquement.

3. Le procédé de la revendication 1, dans lequel on introduit, un addition, un gaz secondaire dans la zone de faible vitesse.

4. Procédé pour faire fonctionner un réacteur à lit fluidisé multisolides comportant un lit fluidisé de particules grossières et, superposé, un lit entraîné de particules fines dans lequel on recycle les particules fines du sommet du réacteur au lit fluidisé de particules grossières situé au fond du réacteur, procédé comprenant les améliorations consistant à:
fournir un réacteur présentant deux zones contigues, une zone supérieure et une autre, inférieure, dont la section droite est inférieure à celle de la zone supérieure,
fluidiser le lit de particules grossières par un gaz fluidisant dans la zone inférieure, introduire les particules fines dans le lit de particules grossières de la zone inférieure et entrainer par le gaz fluidisant les particules fines aussi bien dans la zone inférieure que dans la zone supérieure à une vitesse suffisante pour maintenir le niveau supérieur du lit de particules grossières dans la zone supérieure.

5. Le procédé de la revendication 4, dans lequel on introduit, de plus, le gaz fluidisant à une vitesse suffisante pour élever la limite supérieure du lit de particules grossières dans la zone supérieure.

6. Le procédé de la revendication 4, dans lequel, dans l'une des zones, soit inférieure, soit supérieure, la section droite du réacteur est substantiellement uniforme sur toute sa longueur alors que dans l'autre, cette section droite n'est pas uniforme.

7. Le procédé de la revendication 6, dans lequel la section droite de la zone inférieure est substantiellement uniforme sur toute sa longueur, que la section droite de la zone supérieure est uniforme sur presque toute sa longueur et qu'elle comporte un tronçon de raccord avec la zone inférieure dont la forme va se rétrécissant.

8. Le procédé de la revendication 4, dans lequel c'est, soit la zone supérieure, soit la zone inférieure, dont la section droite va se rétrécissant.

9. Le procédé de la revendication 4, dans lequel aussi bien la zone supérieure que la zone inférieure ont une section droite qui va se rétrécissant.

10. Le procédé de la revendication 9, dans lequel les zones supérieure et inférieure se rétrécissent de manière continue en allant du sommet vers le fond du réacteur.

11. Le procédé de la revendication 4, dans lequel les particules fines et grossières sont inertes.

12. Le procédé de la revendication 4, dans lequel on introduit un gaz secondaire dans la zone supérieure.

13. Le procédé de la revendication 12, dans lequel le gaz fluidisant est introduit à une vitesse insuffisante, en absence du recyclage des particules fines, pour élever les particules grossières plus avant dans la zone supérieure.

8